**Europäisches Patentamt**

**European Patent Office**

**Office européen des brevets**

(11) Veröffentlichungsnummer: **0 304 006**
**A1**

(12) # EUROPÄISCHE PATENTANMELDUNG

(21) Anmeldenummer: 88113255.9

(22) Anmeldetag: 16.08.88

(51) Int. Cl.⁴: **H01M 10/34 , H01M 10/10**

(30) Priorität: 20.08.87 DE 3727763

(43) Veröffentlichungstag der Anmeldung:
22.02.89 Patentblatt 89/08

(84) Benannte Vertragsstaaten:
**AT BE DE ES FR GB IT SE**

(71) Anmelder: **ACCUMULATORENFABRIK SONNENSCHEIN GMBH**
**Thiergarten Postfach 1180**
**D-6470 Büdingen 1 Oberhessen(DE)**

(72) Erfinder: **Kugler, Wolfgang**
**Hanauer Strasse 24**
**D-6474 Ortenberg(DE)**

(74) Vertreter: **Baumann, Eduard, Dipl.-Phys.**
**Postfach 1201 Sattlerstrasse 1**
**D-8011 Höhenkirchen/München(DE)**

(54) **Gasdichter wartungsfreier Blei-Akkumulator.**

(57) Die Erfindung bezieht sich auf einen gasdichten wartungsfreien Blei-Akkumulator hoher Kapazität unter Verwendung eines thixotropen Schwefelsäure-Gels als Elektrolyt.

Um einen liegenden Einbau ohne Austritt von Schwefelsäure beim Ladevorgang zu ermöglichen, wird der untere Bereich des freien Gasraumes zwischen Elektrodenplatten (1, 2) und Gehäusedeckel (7) mit dem positiven Pol (3) durch Schaumstoff-Material (9) ausgefüllt, das vorzugsweise durch einen Trennwinkel (10, 11) vom oberen freien Gasraum (6) mit Überdruckventil (8) getrennt ist.

Fig. 1

EP 0 304 006 A1

## Gasdichter wartungsfreier Blei-Akkumulator

Die Erfindung bezieht sich auf einen gasdichten wartungsfreien Blei-Akkumulator gemäß dem Oberbegriff des Anspruches 1.

Ein lageunabhängiger, im Betrieb gasdichter und im wesentlichen wartungsfreier Blei-Akkumulator unter Verwendung eines thixotropen Schwefelsäure-Gels und für normale, das heißt nicht zu große Außenabmessungen, ist in der CH-PS 391807 beschrieben. Die Schwierigkeit, thixotropes Gel zwischen die Elektrodenplatten einzuführen, bevor dieses fest wurde, setzte eine Grenze für die Außenabmessungen, insbesondere für die Höhe der Elektroden. Die obere Kapazitätsgrenze lag daher bei etwa 20 Ah. Dieses Hindernis wurde durch den Gegenstand der DE-PS 3041953 ausgeräumt, wobei ein bestimmtes Lade-Entladeverhalten, ein bestimmte Einfüllverfahren und eine zeitweise elektrochemische Bindung von Schwefelsäure in den Aktivmassen der Elektrodenplatten das Einfüllen eines im Betriebszustand gelförmigen Elektrolyt unabhängig von den Plattenabmessungen ermöglicht.

Es stellte sich jedoch heraus, daß derartige Blei-Akkumulatoren hoher Bauart nicht so lageunabhängig waren wie Blei-Akkumulatoren normaler oder geringer Abmessungen. Während des Ladevorganges bildet sich nämlich im freien Raum oberhalb der Elektrodenplatten ein gewisser Betrag von flüssiger Schwefelsäure, der bei kleineren Plattenabmessungen praktisch vernachlässigbar gering ist und innerhalb des Gasraumes verbleibt. Bei den deutlich größeren Blei-Akkumulatoren hoher Bauart jedoch kommt es beim Aufladen zur Bildung größerer Mengen flüssiger Schwefelsäure, die bei einem liegenden Einbau des Akkumulators das Überdruckventil erreichen und bei überdruck ins Freie gespritzt würden.

Aus der US-PS 4603093 ist ein liegender Blei-Akkumulator mit liegenden Elektrodenplatten bekannt, wobei jedoch die Pole in üblicher Weise nach oben herausgeführt werden, die einzelnen Elektrodenplatten haben übliche, das heißt relativ kurze, Abmessungen und sind durch übliche Separatoren getrennt. Von einem speziellen Gelelektrolyt ist nicht die Rede. Die Anordnung soll eine höhere Energiedichte und eine höhere Lebensdauer mit sich bringen, letzteres durch Negativelektroden mit höherer Kapazität gegenüber derjenigen der positiven Platten.

Der Erfindung liegt das Problem zugrunde, einen gasdichten wartungsfreien Blei-Akkumulator hoher Kapazität gemäß dem Oberbegriff des Anspruches 1 so auszugestalten, daß eine liegende Anordnung ermöglicht wird, ohne daß Schwefelsäure austritt.

Das Problem wird erfindungsgemäß durch die Merkmale des Kennzeichens des Anspruches 1 gelöst. Weitere Ausgestaltungen der Erfindung sind in den Unteransprüchen unter Schutz gestellt.

Die Lösung besteht in einer bestimmten liegenden Anordnung und im Auffüllen des unteren Bereiches des freien Gasraumes durch elektrolytbeständiges und elektrolytundurchlässiges Material, insbesondere durch Ausschäumen mit Ein-KomponentenPolyurethan, das erst mit der Luftfeuchtigkeit aushärtet und daher längere Zeit frei beweglich ist. Geeignet sind beispielsweise Montage- oder Dichtungsschäume für die Bauindustrie. Unter Umständen ist auch Zwei-Komponenten-Schaum geeignet, so weit er nicht zu schnell aushärtet und deshalb nicht in alle Hohlräume des freien Raumes im Anschluß an die Gelschicht eindringt. Hierzu gehören Verpackungsschäume und im Schleuderguß-Verfahren zu verarbeitende Schäume.

Um eine definierte Trennung des unten liegenden Materiales und insbesondere eine Begrenzung trotz des beim Schäumen entwickelten Druckes zu ermöglichen, wird ein die ganze Fläche ausfüllender Trennwinkel als obere Begrenzung des Füllmateriales eingeführt, wobei der obere freie Gasraum abgetrennt wird.

Oberhalb dieses Materiales sammelt sich beim Laden eine gewisse Menge flüssiger Schwefelsäure an, während dies im unteren Bereich nicht möglich ist. Vorzugsweise ist dieser Trennwinkel nach hinten in Richtung Gelschicht nach unten geneigt, damit die flüssige Schwefelsäure beim Entladen, bei dem sie wieder durch das Gel beziehungsweise die Elektrodenplatten absorbiert wird, rasch zur Gelschicht zurückfließen kann. Das Verhältnis zwischen ausgeschäumtem Bereich und oberem freiem Gasraum ist so zu wählen, daß genügend Platz für die flüssige Schwefelsäure und die sich entwickelnden Gase verbleibt, und daß durch das oben liegende Gas-Überdruckventil nur Gas und keine flüssige Schwefelsäure austritt. Dieses Verhältnis ist bei einem Füllungsgrad zwischen 50 bis 70 Vol. %, vorzugsweise etwa 60 Vol. %, am günstigsten. Hierbei kann nur aus dem dem freien Gasraum zugewandten Bereich der Gelschicht eines entsprechend reduzierte Menge an flüssiger Schwefelsäure austreten, die nicht in die Nähe des Überdruckventiles gelangt.

Vorzugsweise sind die Platten senkrecht angeordnet, eine waagerechte Anordnung ist jedoch prinzipiell ebenfalls möglich. Die positiven elektrodenplatten können als Röhrchenplatten oder Gitterplatten, die negativen elektroden als Gitterlatten ausgebildet sein.

Aus der DE-PS 1070708 ist bekannt, zwischen den elektroden und im gesamten freien Raum des Zellgehäuses eine Füllmasse aus Schaumgummi oder Kunststoffschaum aufzubringen, wobei anschließend eine Verfestigung eintritt. Die Oberfläche der positiven Elektroden soll hierbei durch eine sauerstoffbeständige Schicht wie Glaswolle abgedeckt werden. Aus der DE-PS 1936472 ist die Verbindung zwischen Bauteilen einer elektrischen Akkumulatorbatterie über einen Hohlraum bekannt, in welchen teilweise eine treibmittelhaltige, aufschäumbare, thermoplastische Kunststoffmasse eingespritzt wird, die unter ihrem Blähdruck anschließend den Hohlraum vollständig ausfüllt.

Ein waagerechter Einbau hat für viele Anwendungen erhebliche Vorteile, insbesondere kann er viel Platz sparen, beispielsweise bei Notstromversorgungsanlagen und beim Einbau in Fahrzeuge. Derartige Batterieanlagen hoher Kapazität, z.B. von 200 bis 1500 Ah, können somit mehr oder weniger unzugänglich dort eingebaut werden, wo überflüssiger Platz ist, die Wartung kann für die ganze Lebensdauer, die bis zu 15 Jahre betragen kann, vergessen werden. Bisherige wartungsfreie lageunabhängige Akkumulatoren sind aus Kapazitäten bis etwa 20 Ah beschränkt.

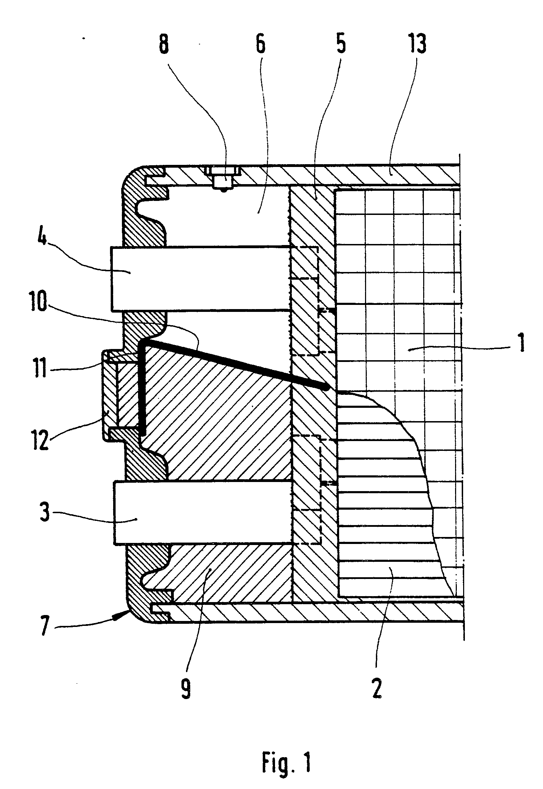

Ein Ausführungsbeispiel der Erfindung ist in der Zeichnung dargestellt.

Die einzige Figur zeigt einen Längsschnitt durch einen liegenden Blei-Akkumulator.

Das dargestellte linke Ende des Blei-Akkumulators wird durch ein Gehäuse (13) begrenzt, an der rechten Seite ist teilweise eine negative Elektrodenplatte (1) und dahinter, getrennt durch einen nicht dargestellten Separator, eine positive Elektrodenplatte (2) dargestellt. Beide Elektrodenplatten sind liegend, jedoch mit der Seitenkante nach oben, dargestellt. Sämtliche positiven Elektrodenplatten des dargestellten Blei-Akkumulators beziehungsweise der dargestellten elektrochemischen Zelle sind miteinander verbunden und in Form des positiven Poles (3) durch den Gehäusedeckel (7) hindurch nach außen geführt. Ebenfalls sind sämtliche negativen Elektrodenplatten (1) miteinander verbunden und über den negativen Pol (4) durch den Gehäusedeckel (7) hindurch nach außen geführt. Der positive Pol (3) ist im unteren Bereich des freien Gasraumes (6), der negative Pol (4) ist symmetrisch gegenüberliegend im oberen Bereich des freien Gasraumes (6) angeordnet. Im oberen Bereich des Gehäuses (13) ist das Überdruckventil (8) angeordnet, das bei überschreiten eines bestimmten Innendruckes öffnet und Gas nach außen entlädt. Dieses überdruckventil könnte im übrigen auch zweckmäßigerweise im oberen Bereich des Gehäusedeckels (7) angeordnet werden. Als linke Begrenzung der positiven Elektrodenplatten (2) und der abwechselnd hierzu angeordneten negativen Elektrodenplatten (1) ist eine Gelschicht (5) angeordnet, durch welche die Verbindungsfahnen der einzelnen Elektrodenplatten hindurch geführt werden.

Etwas oberhalb des Mittenbereiches des freien Gasraumes (6) ist ein Trennwinkel (10) angeordnet, der nach hinten in Richtung Elektrodenplatten um etwa 10° nach unten geneigt ist und in die Gelschicht (5) eintaucht. Die vordere Begrenzung des Trennwinkels (10) bildet ein senkrechter Schenkel (11), der eine öffnung für das Einfüllen von Gel und das Einspritzen von Schaumstoff durch den Einfüllverschluß (12) frei läßt. Der Trennwinkel (10) erstreckt sich über die ganze Breite des gasfreien Raumes (6) und bildet somit eine obere Begrenzung für den Schaumstoff, der sich unter Druck ausdehnt und sich an alle Wandflächen einschließlich der Gelschicht (5) anlegt.

Da das Füllmaterial (9) nicht nur säurebeständig und damit auch elektrolytbeständig, sondern auch geschlossenporig und daher elektrolytundurchlässig ist, kann sich in diesem Bereich beim Aufladen kein flüssiger Elektrolyt in Form von flüssiger Schwefelsäure absondern, sondern nur oberhalb des Trennwinkels 10, es wird somit erheblich weniger Flüssigelektrolyt erzeugt. Durch die Schrägneigung fließt dieser Elektrolyt beim späteren Entladen wieder in Richtung Gel und wird von diesem wieder absorbiert. Das oben liegende Überdruckventil (8) kommt mit der Flüssig-Schwefelsäure nicht in Berührung, es tritt keine Schwefelsäure nach außen aus.

## Ansprüche

1. Gasdichter wartungsfreier Blei-Akkumulator hoher Kapazität, unter Verwendung eines thixotropen Schwefelsäure-Gels als Elektrolyt, mit durch Separatoren getrennten positiven (1) und negativen Elektrodenplatten (2), die mit einem positiven (3) beziehungsweise negativen Pol (4) verbunden sind, mit einer Gelschicht (5) oberhalb der und zwischen den Elektrodenplatten (1, 2), mit einem freien Gasraum (6) oberhalb der Gelschicht (5), einem Gehäusedeckel (7) und einem Überdruckventil (8) innerhalb des freien Gasraumes (6), gekennzeichnet durch

a) eine liegende Anordnung des Akkumulators, wobei der positive Pol (3) im unteren Bereich und das Überdruckventil (8) im oberen Bereich angeordnet sind,

b) die Füllung des unteren Bereiches des freien Gasraumes (6) mit dem positiven Pol (3) durch elektrolytbeständiges und elektrolytundurchlässiges Material (9), und

c) einen die ganze Fläche ausfüllenden Trennwinkel (100), durch den der obere freie Gasraum (6) vom unteren Material- Bereich abgetrennt ist.

2. Akkumulator nach Anspruch 1, dadurch gekennzeichnet, daß als Material (9) ein Ein-Komponenten-Schaum, insbesondere Polyurethan-Schaum, eingesetzt wird.

3. Akkumulator nach Anspruch 1, dadurch gekennzeichnet, daß der Trennwinkel (10) im liegenden Zustand des Akkumulators leicht in Richtung Gelschicht (5) nach unten geneigt ist und vorzugsweise in diese Schicht hineinragt.

4. Akkumulator nach Anspruch 3 , dadurch gekennzeichnet, daß der Trennwinkel einen vorderen Schenkel (11) aufweist, der mit dem Gehäusedeckel (7) verbunden ist, und daß nach Aufsetzen des Gehäusedeckels (7) nebst damit verbundenem Trennwinkel (10) das Schaum- Material (9) durch den Einfüllverschluß (12) in den unteren Bereich des Akkumulator-Gehäuses einspritzbar ist, wobei der Trennwinkel (10) eine obere Begrenzung und die Gelschicht (5) die innere Begrenzung bildet, und wobei der positive Pol (3) zum gleichzeitigen Erzielen eines Korrosionsschutzes fest ummantelt wird.

5. Akkumulator nach einem der Ansprüche 1 bis 4, dadurch gekennzeichnet, daß die obere Grenze des Materials (9) mindestens über den Bereich des positiven Poles (3) und höchstens über den gegenüberliegend darüber angeordneten Bereich des negativen Poles (4) hinausreicht, und daß das Material (9) vorzugsweise 50 bis 70 Vol. % des ursprünglichen gesamten freien Gasraumes einnimmt.

6. Akkumulator nach einem der Ansprüche 1 bis 5, dadurch gekennzeichnet, daß die positiven Elektroden (1) Röhrchenplatten oder Gitterplattenelektroden und daß die negativen Elektroden (2) Gitterplattenelektroden sind.

Fig. 1

## EINSCHLÄGIGE DOKUMENTE

EP 88113255.9

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | DE - C - 1 070 708 (ACCUMULATOREN-FABRIK) <br> * Anspruch 1 * <br> -- | 1,2 | H 01 M 10/34 <br> H 01 M 10/10 |
| A | US - A - 4 447 508 (JENSEN) <br> * Zusammenfassung; Fig. 2 * <br> -- | 1,6 | |
| A | GB - A - 1 602 383 (CHLORIDE) <br> * Fig. 7; page 5, lines 50,51 * <br> ---- | 1 | |

RECHERCHIERTE
SACHGEBIETE (Int. Cl.4)

H 01 M

Der vorliegende Recherchenbericht wurde für alle Patentansprüche erstellt.

| Recherchenort | Abschlußdatum der Recherche | Prüfer |
|---|---|---|
| WIEN | 25-11-1988 | LUX |